# EUROPÄISCHE PATENTANMELDUNG

(11) **EP 1 749 688 A2**
(43) Veröffentlichungstag der Anmeldung: **07.02.2007**
(21) Anmeldenummer: 06014426.8
(22) Anmeldetag: 12.07.2006
(51) Int. Cl.: B60K 35/00

(54) **Informationssystem für ein Kraftfahrzeug**

(30) Priorität: 01.08.2005 DE 102005035992
(71) Anmelder: GM Global Technology Operations, Inc., Detroit, MI 48265-3000 (US)
(72) Erfinder: Hahn, Karl-Michael, 65835 Liederbach (DE)
(74) Vertreter: Daniel, Ulrich W.P.

(57) **Zusammenfassung**

Ein Informationssystem für ein Kraftfahrzeug umfasst eine Datenverarbeitungsvorrichtung und eine Anzeigeeinrichtung zur Darstellung von gespeicherten Informationen, die mittels einer Bedieneinrichtung auswählbar und aus einer Speichereinrichtung auslesbar sind. Zur Erhöhung des Nutzungskomforts des Kraftfahrzeugs handelt es sich bei den Informationen um solche einer Bedienungsanleitung und bei Auswahl einer Information ist die entsprechende Einrichtung im Kraftfahrzeug aktivierbar.

## Beschreibung

Die Erfindung bezieht sich auf ein Informationssystem für ein Kraftfahrzeug mit einer Datenverarbeitungsvorrichtung und einer Anzeigeeinrichtung zur Darstellung von gespeicherten Informationen, die mittels einer Bedieneinrichtung auswählbar und aus einer Speichereinrichtung auslesbar sind.

Moderne Kraftfahrzeuge verfügen über verschiedene Datenverarbeitungsvorrichtungen, beispielsweise in Form eines Bordcomputers, um verschiedene Funktionalitäten des Kraftfahrzeugs steuern und überwachen zu können. Hierfür ist insbesondere in einem mittigen Bereich eines Armaturenbretts ein Bildschirm angeordnet, über den mit an sich beliebig ausgestalteten Bedienungselementen unter anderem verschiedene Messgrößen, wie z. B. der momentane Kraftstoffverbrauch, abgerufen werden können. Ebenso kann auf dem Bildschirm die Anzeige eines Navigationssystems ausgegeben werden oder eine Auswahl von auf einem Speichermedium gespeicherten Musikstücken vorgenommen werden.

Im Weiteren sind elektronische Handbücher für Personal Computer (PC) bekannt, die Mittel zu einem schnellen und umfassenden Informationsabruf umfassen. Ein weiterer Pluspunkt ist eine integrierbare Benutzerhilfe, die sich den individuellen Anforderungen der Anwender anpassen lässt. Darüber hinaus ist über entsprechende Schnittstellen eine Verbindung zu weiteren Informationen möglich, die nicht unmittelbarer Bestandteil eines Handbuches sind.

Die DE 203 02 143 U1 offenbart ein Fahrerwarn- und Informationssystem zur Unterstützung von Fahrzeugführern, das eine Einrichtung zur Positionsbestimmung, eine Programmlogik, eine Datenbank und eine Ausgabeeinrichtung umfasst. Die Programmlogik gibt in Abhängigkeit von der Position des Fahrzeugs Warnmeldungen über die Ausgabeeinrichtung aus.

Darüber hinaus zeigt die EP 0 591 560 A1 ein Informationsspeichersystem zur Bereitstellung einer Eingabe für ein Computersystem zur Information eines Benutzers, das eine Vielzahl von Blättern mit visuellen Markierungen umfasst. Die Blätter sind für Speicherzwecke wirksam miteinander verbunden und können dem Benutzer nacheinander angezeigt werden. Eine Speichereinrichtung dient zur elektronischen Speicherung von Informationen, die auf die speziellen visuellen Markierungen auf den Blättern abgestimmt sind. Im Weiteren sind Mittel zur Eingabe einer bestimmten Position auf einem spezifischen Blatt relativ zu den visuellen Markierungen vorgesehen. Steuermittel reagieren auf die Mittel zur Eingabe, um eine Speichereinrichtung zur Bereitstellung von Daten entsprechend der Stelle der visuellen Markierungen anzusprechen. Schließlich sind Mittel zur Aufbereitung der Daten vorhanden, um eine entsprechende Ausgabe der Informationen für den Benutzer bereit zu stellen.

Des Weiteren ist aus der nicht vorveröffentlichten DE 10 2005 002 277 A1 ein Informationssystem für ein Kraftfahrzeug der eingangs genannten Art bekannt, bei dem Informationen nach Art eines Ratgeber-Handbuchs abrufbar sind. Beispielsweise können Ratschläge für Erste-Hilfe-Maßnahmen im Falle eines Personenschadens abgerufen werden.

Weiterhin ist es bekannt, werksseitig einem Kraftfahrzeug eine Bedienungsanleitung in gedruckter Form mitzugeben, um den Nutzer mit sämtlichen Funktionen des Kraftfahrzeugs vertraut zu machen. Aufgrund der Vielzahl an elektronischen Komponenten moderner Kraftfahrzeuge sowie der häufig sehr aufwändigen Ansteuerung beispielsweise einer Audioanlage weisen diese Bedienungsanleitungen aber einen sehr großen Umfang auf, wodurch diese häufig nicht gelesen werden und es daher zu Fehlbedienungen des Kraftfahrzeugs kommen kann.

Es ist Aufgabe der Erfindung, ein Informationssystem der eingangs genannten Art zu schaffen, das eine zuverlässige Wissensvermittlung über alle Funktionen des Kraftfahrzeugs an einen Nutzer gewährleistet.

Erfindungsgemäß wird die Aufgabe dadurch gelöst, dass es sich bei den Informationen um solche einer Bedienungsanleitung des Kraftfahrzeugs handelt und bei Auswahl einer Information die entsprechende Einrichtung im Kraftfahrzeug aktivierbar ist.

Der Kerngedanke der Erfindung besteht darin, alle Informationen, die üblicherweise in einer gedruckten Bedienungsanleitung oder einem Handbuch dem Kraftfahrzeug mitgegeben werden, zusätzlich auf einem Speichermedium in elektronischer Form zu speichern, so dass mit einem an sich bekannten Informationssystem, das beispielsweise in Form eines Bordcomputers in dem Fachmann bekannter Weise ausgeführt ist, abgerufen und dem Nutzer zugänglich gemacht werden können. Hierzu bietet es sich an, diese Informationen entsprechend der Gliederung in bekannten Bedienungsanleitungen in verschiedene Bereiche aufzuteilen, beispielsweise die Innenausstattung des Kraftfahrzeugs, die Außenausstattung, Sicherheitseinrichtungen, technische Daten etc..

Zum Abruf der Informationen kann der Nutzer entweder über eine menügeführte Steuerung oder über eine indexgestützte Stichwortsuche die von ihm benötigten Informationen aufrufen, die ihm nachfolgend auf der Anzeigeeinrichtung wiedergegeben werden. Es versteht sich, dass die Anzeigeeinrichtung vorzugsweise in Form eines LCD- oder TFT-Displays ausgeführt ist, das insbesondere zur einfachen Bedienung als Touchscreen ausgebildet ist, und die elektronische Bedienungsanleitung vorzugsweise auf einer CD-ROM oder einer DVD gespeichert ist.

Hat ein Nutzer die von ihm gewünschte Information ausgewählt, wird ihm diese über die Anzeigeeinrichtung wiedergegeben. Gleichzeitig ist das Informationssystem derart ausgelegt, dass die entsprechende Einrichtung im Kraftfahrzeug aktiviert bzw. eingeschaltet wird. Hat der Nutzer beispielsweise die Information bezüglich einer Innenraumbeleuchtung ausgewählt, so wird diese nach der Auswahl dieser Information auch aktiviert, um dem Nutzer die ausgewählte Information zu verdeutlichen.

Der Vorteil der Erfindung liegt darin, dass durch die Interaktivität des Informationssystems der Nutzer beliebige Informationen der Bedienungsanleitung in einfacher Weise, beispielsweise über ein Bildschirmmenü oder über eine Auswahl mit an sich beliebig ausgestalteten Bedienungseinrichtungen, abrufen kann und er sonach nicht gezwungen ist, eine umfangreiche gedruckte Bedienungsanleitung zu lesen. Durch die zusätzliche Ansteuerung der Einrichtungen, die der Nutzer ausgewählt hat, erhält er eine unmittelbare Rückmeldung, wodurch das Anwenden dieser elektronischen Bedienungsanleitung subjektiv als angenehm empfunden wird.

Zur Verbesserung der Informationsvermittlung kann die vom Nutzer ausgewählte Information auch akustisch über die im Kraftfahrzeug bereits vorhandene Audioanlage ausgegeben werden. Das bedeutet, dass eine Textinformation nicht nur visuell dargestellt sondern auch vorgelesen wird.

Zur Erleichterung des Auffindens verschiedener Bedienungselemente, wie Druckknöpfe, Schalter, Lenkstockhebel und dergleichen, die zur Steuerung beliebiger Funktionen des Kraftfahrzeugs notwendig sind, ist das Informationssystem derart ausgelegt, dass bei der Auswahl der entsprechenden Information nicht nur die ausgewählte Funktion angesteuert wird, sondern auch der Fahrer auf das zugehörige Bedienelement aufmerksam gemacht wird. Hat der Fahrer beispielsweise Informationen über die Heckscheibenheizung abgerufen, so kann er z. B. durch blinkendes Aufleuchten des entsprechenden Schalters auf seine Position im Armaturenbrett aufmerksam gemacht werden. In gleicher Weise kann auch ein akustischer Hinweis über den Ort des Bedienelements ausgegeben werden.

Zur Erhöhung der Verkehrssicherheit kann vom Informationssystem eine Überprüfung der vom Nutzer bzw. Fahrer des Kraftfahrzeugs durchzuführenden Maßnahmen erfolgen. So ist es besonders bei ABS-gestützten Bremssystemen notwendig, das Bremspedal mit voller Kraft durchzudrücken, um eine Vollbremsung vorzunehmen. Zur Überprüfung, ob dies vom Fahrer auch korrekt durchgeführt wird, fordert das Informationssystem optisch und/oder akustisch den Fahrer auf, eine Vollbremsung zu simulieren. Der vom Fahrer ausgeübte Pedaldruck wird dabei überwacht und anschließend eine Information ausgegeben, ob der Pedaldruck ausreichend war oder nicht. Dies kann auch bis zum korrekten Ergebnis beliebig oft wiederholt werden, um einen Übungseffekt zu erzielen. Dies kann auch in der Form eines Trainingsprogramms erfolgen, in dem nacheinander alle verkehrsrelevanten Funktionen bzw. deren korrekte Bedienung durch den Fahrer vom Informationssystem überprüft werden.

Zur Erhöhung des Nutzungskomforts ist das Informationssystem derart ausgelegt, dass eine aktive Begleitung, insbesondere bei der Programmierung einer Audioanlage, vorgenommen wird. Hierzu kann der Nutzer beispielsweise Informationen über das Programmieren des Autoradios abrufen. Nachfolgend wird er von dem Informationssystem über optische und/oder akustische Hinweise unter anderem durch die richtige Programmierung von Sendern auf verschiedenen Speichertasten geführt. In gleicher Weise ist es möglich, dass von dem Informationssystem nacheinander alle verschiedenen Funktionalitäten des Kraftfahrzeugs abgerufen bzw. aktiviert werden, wobei der Fahrer über die jeweilige Funktionalität, wie das Einschalten der Innenraumbeleuchtung sowohl durch die eingeschaltete Beleuchtung selbst als auch durch einen Hinweis auf das entsprechende Betätigungselement, z. B. das Aufblinken des hierfür vorgesehenen Schalters, aufmerksam gemacht wird. Somit können ihm bei einem Neuwagen alle Funktionen vertraut gemacht werden.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Informationssystem für ein Kraftfahrzeug mit einer Datenverarbeitungsvorrichtung und einer Anzeigeeinrichtung zur Darstellung von gespeicherten Informationen, die mittels einer Bedieneinrichtung auswählbar und aus einer Speichereinrichtung auslesbar sind, **dadurch gekennzeichnet, dass** es sich bei den Informationen um solche einer Bedienungsanleitung des Kraftfahrzeugs handelt und bei Auswahl einer Information die entsprechende Einrichtung im Kraftfahrzeug aktivierbar ist.

2. Informationssystem nach Anspruch 1, **dadurch gekennzeichnet, dass** eine akustische Informationswiedergabe ausführbar ist.

3. Informationssystem nach Anspruch 1 oder 2, **dadurch gekennzeichnet, dass** ein Bedienungselement zur Steuerung einer Funktion optisch und/oder akustisch markierbar ist.

4. Informationssystem nach einem der Ansprüche 1 bis 3, **dadurch gekennzeichnet, dass** eine Überprüfung der von einem Fahrer des Kraftfahrzeugs durchzuführenden Maßnahmen realisierbar ist.

5. Informationssystem nach einem der Ansprüche 1 bis 4, **dadurch gekennzeichnet, dass** ein Nutzer bei der Ausführung verschiedener Maßnahmen durch das Informationssystem unterstützbar ist.
